# EUROPÄISCHE PATENTSCHRIFT

(11) **EP 0 715 105 B1**
(45) Veröffentlichungstag und Bekanntmachung des Hinweises auf die Patenterteilung: **19.01.2000**
(21) Anmeldenummer: 95117203.0
(22) Anmeldetag: 02.11.1995
(51) Int. Cl.: F16K 11/087

(54) **Kugelhahn**
Ball valve
Robinet à tournant sphérique

(30) Priorität: 02.12.1994 DE 4442984; 10.07.1995 DE 19525062
(43) Veröffentlichungstag der Anmeldung: 05.06.1996
(73) Patentinhaber: ITT Richter Chemie-Technik GmbH, D-47906 Kempen (DE)
(72) Erfinder: Naasner, Günter, D-47906 Kempen (DE)
(74) Vertreter: COHAUSZ HANNIG DAWIDOWICZ & PARTNER

(56) Entgegenhaltungen:
- EP-A- 0 198 129
- DE-A- 3 702 598
- DE-A- 4 235 723
- US-A- 3 370 612
- US-A- 4 212 321

## Beschreibung

Die Erfindung betrifft einen Kugelhahn mit einem im Hahngehäuse gelagerten kugelförmigen Stellglied und Ein- und Auslässen in der Wandung des Gehäuseinnenraumes, der das Stellglied aufnimmt.

Aus der DE-A-3 702 598 ist ein derartiger Kugelhahn bekannt, der eine Mehrfachverteilfunktion übernimmt. Die Drehachse des kugelförmigen Stellgliedes verläuft bei diesem Mehrfachverteiler durch eine Auslaßleitung, der aus verschiedenen Einlässen durch Drehung des Stellgliedes Flüssigkeiten oder Gase zugeführt werden können. Hierzu liegen sämtliche Einlaßleitungen auf einer Ebene, die senkrecht zur Drehachse verläuft. Da alle Einlaßleitungen nur eine gemeinsame Auslaßleitung haben, ist die Variabilität dieses Mehrfachverteilers eingeschränkt.

Bei flüssigkeits- und gasfördernden Anlagen, in denen Pumpen und Armaturen installiert sind, gibt es häufig die Anforderung, einen ankommenden Förderstrom wechselweise in eine erste und alternativ dazu, in eine zweite Armatur oder Pumpe zu leiten und anschließend wieder in die Hauptleitung zurückzuführen. Üblicherweise wird eine solche Wechselschaltung konventionell installiert, d.h. mit zwei Hosenrohren und mehreren Absperreinrichtungen (in der Regel 4) werden die alternativ einsetzbaren Armaturen oder Pumpen mit der Hauptrohrleitung verbunden. Es sind auch Wechselventile bekannt (DD 293 177 A5), die diesen Installationsaufwand reduzieren helfen. Allerdings sind diese Ausführungen, wie z.B. Doppelventile oder Drehschieberventile sehr aufwendig und kostspielig aufgebaut.
Bei Armaturen, die mit Auskleidungen aus Kunststoffen versehen sind (z.B. im hochkorrosiven Bereich), sind solche Doppelventile oder Drehschieberventile technisch und wirtschaftlich nicht realisierbar.

Aufgabe der Erfindung ist es, einen Kugelhahn zu schaffen, durch den bei einfacher Konstruktion und Handhabung die unterschiedlichsten Verbindungen zwischen einer hohen Zahl von Anschlüssen schaffbar sind.

Diese Aufgabe wird erfindungsgemäß dadurch gelöst, daß die Wandung des Gehäuseinnenraumes mindestens sechs Ein- bzw. Auslässe aufweist und jeder Ein- bzw. Auslaß (a, c, e) mit einem anderen Ein- bzw. Auslaß (b, d, f) fluchtet und die Drehachse, um die das kugelförmige Stellglied drehverstellbar ist, zwischen den Ein- und Auslässen verläuft.

Ein solcher Kugelwechselhahn weist, beispielsweise jeweils 90 Grad versetzt, mehrere, insbesondere 6 Anschlußflansche auf. Die Kugel ist mindestens zu einer Hauptachse im Winkel von ca. 45 Grad drehbar gelagert und weist mindestens einen inneren Kanal, vorzugsweise zwei bis drei innere Kanäle auf, die jeweils zwei Anschlußstutzen verbinden.

Der Kugelhahn kann das strömende Medium einer Hauptstromleitung alternativ in zwei unterschiedliche Armaturen bzw. Pumpen umlenken und wieder auf die Hauptleitung zurückführen, und zwar in einer Form, daß die nicht im Eingriff befindliche Armatur oder Pumpe von der Hauptstromleitung dicht abgesperrt ist. Diese Funktion wird in einer einzigen Armatur realisiert, was eine sehr große Rationalisierung der Bauteilkosten bei der Installation und bei der eventuellen Automatisierung der Wechsel-Funktion bedeutet.

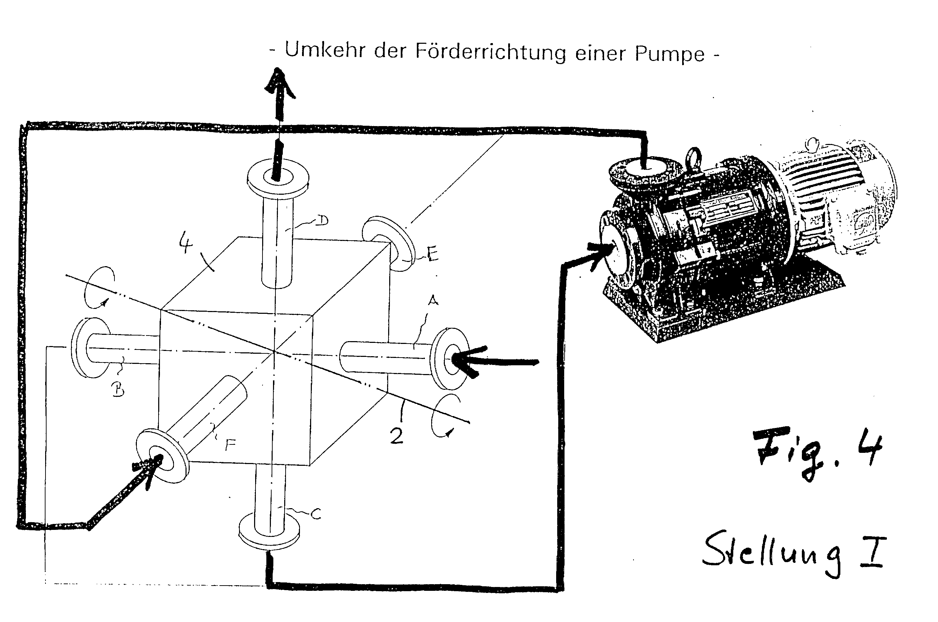

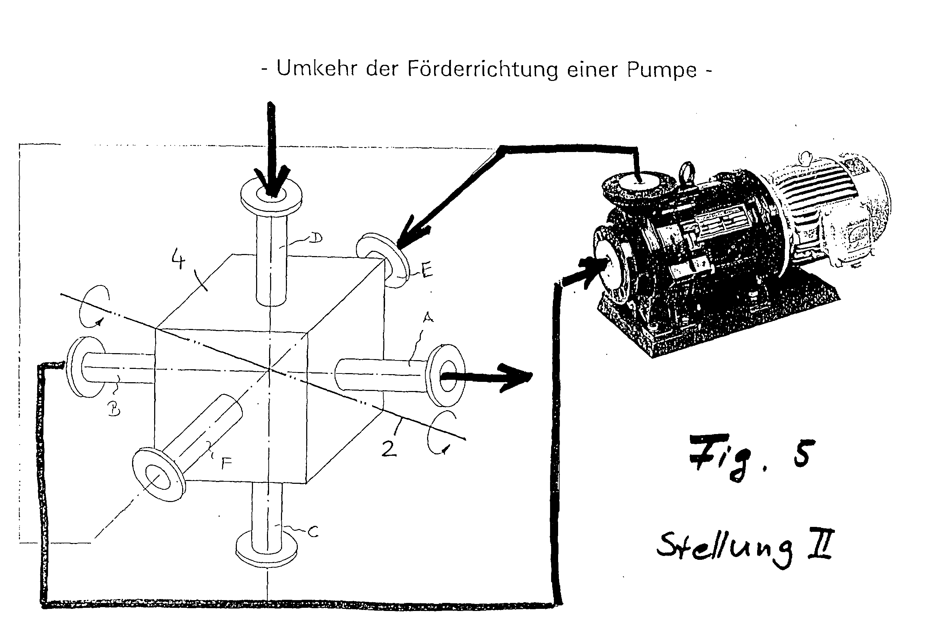

In verschiedenen Installationen ist es notwendig, die Förderrichtung einer Pumpe umzukehren, um somit z.B. über einen bestimmten Zeitraum in einen Behälter, Mischer o.ä. hineinzufördern und anschließend wieder herauszufördern. Aufgrund der Kompliziertheit der Installation werden hierzu häufig zwei separate Pumpen installiert. Mit dem dargestellten Kugelwechselhahn ist es möglich, durch 180 Grad-Verstellung einer einzigen Armatur die Förderrichtung einer Pumpe umzukehren, siehe Figuren 4 und 5.

Vorteilhafte Ausgestaltungen der Erfindung sind in den Unteransprüchen aufgeführt.

Ein Ausführungsbeispiel der Erfindung ist in den Zeichnungen dargestellt und wird im folgenden näher beschrieben. Es zeigen:
- Figur 1:: Eine perspektivische schematische Darstellung des Kugelventils in einer ersten Hahnstellung.

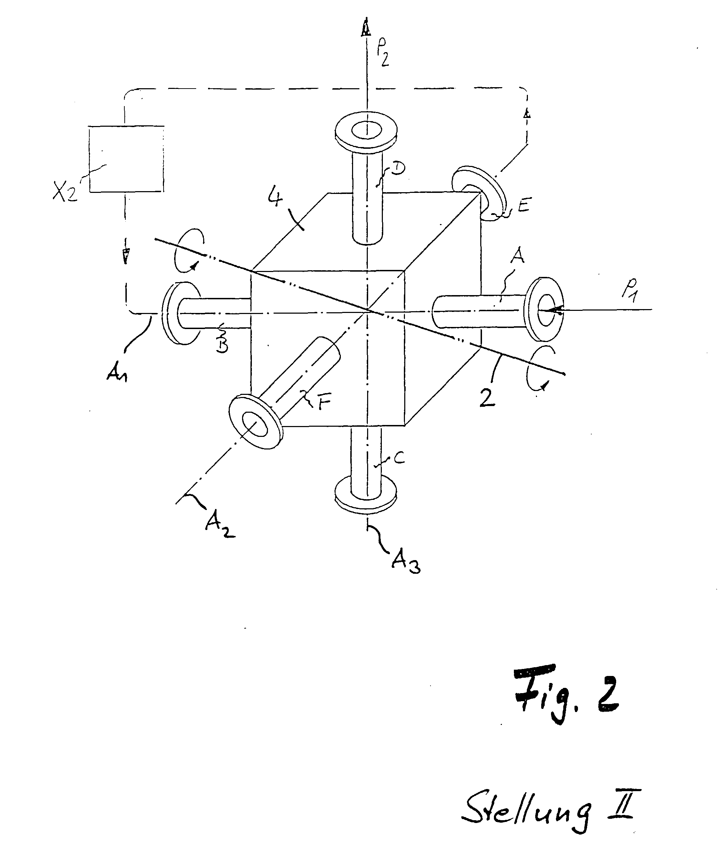

- Figur 2:: Das Kugelventil nach Figur 1 in einer zweiten Hahnstellung.

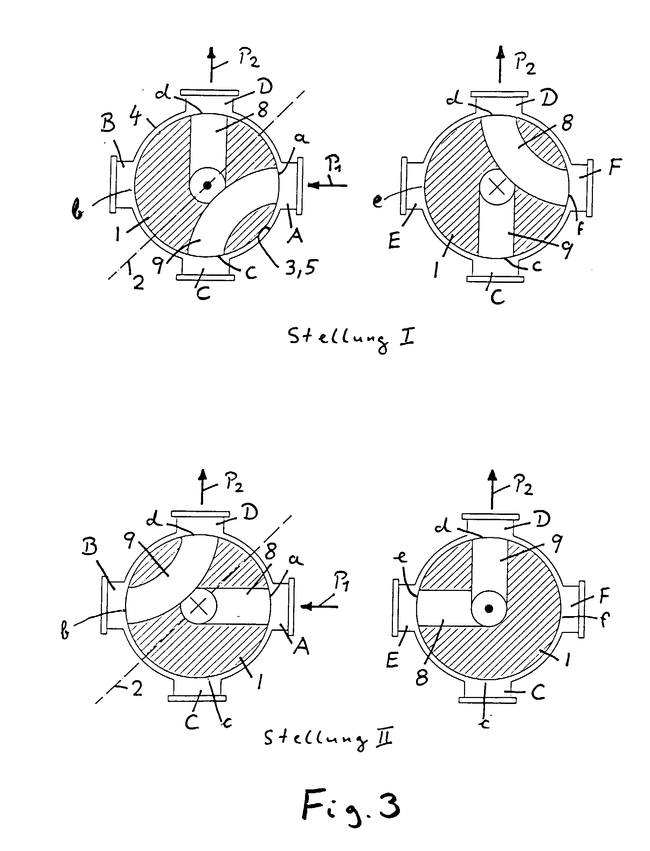

- Figur 3:: Schnitte durch den Kugelhahn in zwei Stellungen bei schematisch dargstelltem Gehäuse und
- Figur 4 und 5 :: zwei schematische Darstellungen des an einer Pumpe angeschlossenen Kugelventils, das durch seine zwei Ventilstellungen zwei unterschiedliche Förderrichtungen erzeugt.

Der Kugelhahn weist ein kugelförmiges Stellglied 1 bzw. Küken auf, das um eine Achse 2 drehverstellbar in dem Innenraum 3 eines Hahngehäuses 4 gelagert ist. Die kugelförmige Innenwand 5 des Innenraums 3 oder nicht dargestellte Sitzringe liegen direkt an dem Stellglied 1 an. Die Innenwand 5 bildet sechs Ein- bzw. Auslässe a bis f, an die sechs Anschlußstutzen A bis F sich anschließen.

Je zwei Ein- bzw. Auslässe a bis f liegen mit ihren Anschlußstutzen A bis F paarweise auf je einer Achse A1, A2 und A3, die zueinander jeweils in einem Winkel von 90 Grad stehen und einander im Mittelpunkt 6 des Stellglieds 1 schneiden. Durch den Mittelpunkt 6 verläuft auch die schräg liegende Drehachse 2 des Stellgliedes. Hierbei bildet die Drechachse 2 mit den Achsen mindestens einer Hauptachse (A1, A2, A3) jeweils einen Winkel von 45 Grad.

Im Innern des Stellglieds 1 sind im Ausführungsbeispiel nur zwei Verbindungskanäle 8, 9 eingeformt. Jeder dieser zwei Kanäle 8, 9 ist gekrümmt ausgeführt und verläuft bogenförmig, so daß ein Kanal niemals zwei Ein- bzw. Auslässe auf derselben Achse A1, A2, A3 verbindet, sondern stets einen Ein- bzw. Auslaß einer Achse mit dem Ein- bzw. Auslaß einer anderen Achse verbindet.

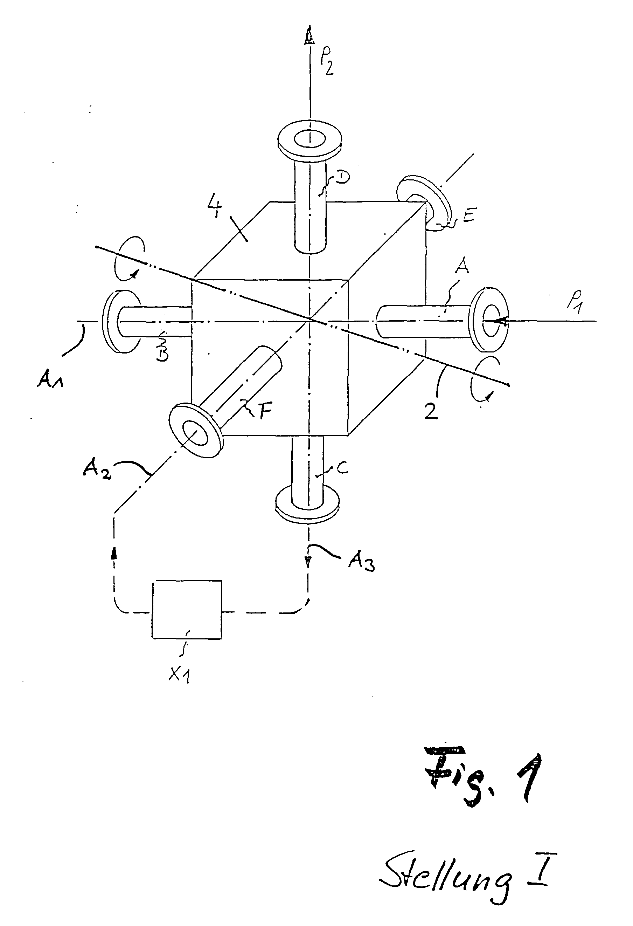

Figur 1 zeigt den Kugelwechselhahn einmal in der Stellung I. Hierbei ist der Hauptstrom P1, P2 unterbrochen und das einströmende Medium wird vom Stutzen A auf Stutzen C geleitet, von dort in eine Armatur oder Pumpe X1 und wieder zurück in den Kugelwechselhahn über den Stutzen F zum Stutzen D, der wiederum zur zentralen Hauptleitung P2 führt. Bei einer Schwenkung der Kugel um 180 Grad in die Stellung II ergibt sich folgende Situation:

Der Hauptstrom P1, P2 ist unterbrochen und wird von Stutzen A über Stutzen E zur Armatur bzw. Pumpe X2 geleitet. Von dort gelangt er zurück über Stutzen B zu Stutzen D und damit wieder in die Hauptstromleitung P2. Hierbei kann die Förderrichtung nach dem Umschalten auch in entgegengesetzter Richtung sein.

In den Figuren 4 und 5 ist der Kugelwechselhahn beim Anschluß an eine Pumpe 10 dargestellt. Die Pumpe 10 fördert ständig in dieselbe Richtung und je nach Stellung des Stellglieds wird über die Stutzen C und D in die eine Richtung und in die entgegengesetzte Richtung der Hauptrohrleitung gefördert.

Das Gehäuse kann aus zwei Teilen bestehen, deren Teilungsebene rechtwinklig zur Drehachse 2 liegt.

## Patentansprüche

1. Kugelhahn mit einem im Hahngehäuse (4) gelagerten kugelförmigen Stellglied (1) und Ein- und Auslässen (a-f) in der Wandung (5) des Gehäuseinnenraumes (3), der das Stellglied (1) aufnimmt, **dadurch gekennzeichnet**,
- daß die Wandung des Gehäuseinnenraumes (3) mindestens sechs Ein- bzw. Auslässe (a-f) aufweist und jeder, Ein- bzw. Auslaß (a, c, e) mit einem anderen Ein- bzw. Auslaß (b, d, f) fluchtet und
- daß die Drehachse (2), um die das kugelförmige Stellglied drehverstellbar ist, zwischen den Ein- und Auslässen verläuft.

2. Kugelhahn nach Anspruch 1, **dadurch gekennzeichnet**, daß die Ein- bzw. Auslässe (a-f) paarweise jeweils auf einer Achse (A1, A2, A3) liegen.

3. Kugelhahn nach Anspruch 1 oder 2, **dadurch gekennzeichnet**, daß die drei Achsen (A1, A2, A3) alle miteinander Winkel von 90% bilden.

4. Kugelhahn nach einem der vorherigen Ansprüche, **dadurch gekennzeichnet**, daß die Drehachse (2) des Stellgliedes schräg zu mindestens einer Hauptachse (A1, A2, A3) liegt.

5. Kugelhahn nach einem der vorherigen Ansprüche, **dadurch gekennzeichnet**, daß die Drehachse (2) mit mindestens einer Hauptachse (A1, A2, A3) einen Winkel von 45 Grad bildet.

6. Kugelhahn nach einem der vorherigen Ansprüche, **dadurch gekennzeichnet**, daß im Ventilstellglied (1) zwei Kanäle (8, 9) angeordnet sind, die die Ein- und Auslässe (a-f) wahlweise miteinander verbinden.

7. Kugelhahn nach Anspruch 6, **dadurch gekennzeichnet**, daß die im Ventilstellglied (1) angeordneten Kanäle gekrümmt ausgeführt sind und den auf einer Achse liegenden Ein- oder Auslaß mit dem auf einer anderen Achse liegenden Aus- oder Einlaß verbinden.

8. Kugelhahn nach einem der vorherigen Ansprüche, **dadurch gekennzeichnet**, daß die Gehäuseteilung quer zur Drehachse (2) liegt.

## Claims

1. A ball valve having a spherical plug (1) mounted in the valve casing (4) and also inlets and outlets (a-f) in the wall (5) of the casing inner chamber (3) which receives the plug (1),
**characterised in that** the wall of the casing inner chamber (3) has at least six inlets/outlets (a-f) and each inlet/outlet (a, c, e) is aligned with another inlet/outlet (b, d, f), and
the axis of rotation (2) around which the spherical plug can be rotatably adjusted extends between the inlets and outlets.

2. A ball valve according to claim 1,
**characterised in that** the inlets/outlets (a-f) are disposed in pairs on an axis (A1, A2, A3).

3. A ball valve according to claims 1 or 2,
**characterised in that** the three axes (A1, A2, A3) all form an angle of 90°.

4. A ball valve according to one of the preceding claims,
**characterised in that** the axis of rotation (2) of the plug lies at an inclination to at least main axis (A1, A2, A3).

5. A ball valve according to one of the preceding claims,
**characterised in that** the axis of rotation (2) forms an angle of 45° with at least one main axis (A1, A2, A3).

6. A ball valve according to one of the preceding claims,
**characterised in that** disposed in the valve plug (1) are two channels (8, 9) which connect the inlets/outlets (a-f) optionally to one another.

7. A ball valve according to claim 6,
**characterised in that** the channels disposed in the valve plug (1) are constructed curved and connect the inlet or outlet lying on one axis to the outlet or inlet lying on another axis.

8. A ball valve according to one of the preceding claims,
**characterised in that** the division of the casing lies transversely of the axis of rotation (2).

## Revendications

1. Robinet à boisseau sphérique avec un organe de réglage (1) sphérique monté dans le boîtier de robinet (4) et des entrées et sorties (a-f) dans la paroi (5) du volume intérieur (3) du boîtier qui reçoit l'organe de réglage (1),
caractérisé en ce
- que la paroi du volume intérieur (3) du boîtier présente au moins six entrées ou respectivement sorties (a-f) et chaque entrée ou respectivement sortie (a,c,e) est alignée avec une autre entrée ou respectivement sortie (b,d,f,) et
- que l'axe de rotation (2) autour duquel l'organe de réglage sphérique est mobile en rotation s'étend entre les entrées et sorties.

2. Robinet à boisseau sphérique selon la revendication 1, caractérisé en ce que les entrées ou respectivement sorties (a-f) sont disposées respectivement par paires sur un axe (A1, A2, A3).

3. Robinet à boisseau sphérique selon la revendication 1 ou 2,
caractérisé en ce que les trois axes (A1, A2, A3) forment tous entre eux un angle de 90°.

4. Robinet à boisseau sphérique selon l'une des revendications précédentes,
caractérisé en ce que l'axe de rotation (2) de l'organe de réglage se trouve incliné par rapport à au moins un axe principal (A1, A2, A3)

5. Robinet à boisseau sphérique selon l'une des revendications précédentes,
caractérisé en ce que l'axe de rotation (2) forme avec au moins un axe principal (A1, A2, A3) un angle de 45 degrés.

6. Robinet à boisseau sphérique selon l'une des revendications précédentes,
caractérisé en ce que deux canaux (8, 9), qui relient au choix les entrées et sorties (a-f) entre elles, sont disposées dans l'organe de réglage (1) de robinet.

7. Robinet à boisseau sphérique selon la revendication 6,
caractérisé en ce que les canaux disposés dans l'organe de réglage (1) de robinet sont réalisés courbés et relient l'entrée ou sortie disposée sur un axe à l'entrée ou sortie disposée sur un autre axe.

8. Robinet à boisseau sphérique selon l'une des revendications précédentes,
caractérisé en ce que la division du boîtier est disposée transversalement à l'axe de rotation (2).
